(19) **Europäisches Patentamt European Patent Office Office européen des brevets**

(11) **EP 4 053 796 B1**

(12) **EUROPEAN PATENT SPECIFICATION**

(45) Date of publication and mention of the grant of the patent:
**22.04.2026 Bulletin 2026/17**

(21) Application number: **21425008.6**

(22) Date of filing: **03.03.2021**

(51) International Patent Classification (IPC):
**G06T 7/73** *(2017.01)*

(52) Cooperative Patent Classification (CPC):
**G06T 7/74;** G06T 2207/10021; G06T 2207/20164;
G06T 2207/30204; G06T 2207/30221

(54) **SPACE RECOGNITION AND TRACKING SYSTEM OF A BARBELL**

RAUMERKENNUNGS- UND -VERFOLGUNGSSYSTEM FÜR EINE HANTEL

SYSTÈME DE RECONNAISSANCE D'ESPACE ET DE SUIVI D'UN D'HALTÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.09.2022 Bulletin 2022/36**

(73) Proprietor: **CBL Electronics S.r.l.**
**06059 Todi (PG) (IT)**

(72) Inventor: **Biagetti, Daniele**
**05022 Amelia (TR) (IT)**

(74) Representative: **Baldi, Claudio**
**Ing. Claudio Baldi S.r.l.**
**Viale Cavallotti, 13**
**60035 Jesi (Ancona) (IT)**

(56) References cited:
• **FLORES FRANCISCO J ET AL: "Validity and reliability of a 3-axis accelerometer for measuring weightlifting movements", vol. 11, no. 6, 1 December 2016 (2016-12-01), Brentwood, Essex, pages 872 - 879, XP055826442, ISSN: 1747-9541, Retrieved from the Internet <URL:https://journals.sagepub.com/doi/pdf/ 10.1177/1747954116676114> DOI: 10.1177/ 1747954116676114**

• **HADI G�KHAN ET AL: "Three-Dimensional Kinematic Analysis of the Snatch Technique for Lifting Different Barbell Weights", vol. 26, no. 6, 1 June 2012 (2012-06-01), US, pages 1568 - 1576, XP055826433, ISSN: 1064-8011, Retrieved from the Internet <URL:http://dx.doi.org/10.1519/ JSC.0b013e318231abe9> DOI: 10.1519/ JSC.0b013e318231abe9**

• **DAEHLIN TORSTEIN E ET AL: "Downloaded from http ENHANCING DIGITAL VIDEO ANALYSIS OF BAR KINEMATICS IN WEIGHTLIFTING: A CASE STUDY", 1 January 2016 (2016-01-01), XP055827241, Retrieved from the Internet <URL:https://pubmed.ncbi.nlm.nih.gov/ 28538310/> [retrieved on 20210723]**

• **WANG ZHELONG ET AL: "Motion Analysis of Deadlift for Trainers With Different Levels Based on Body Sensor Network", IEEE TRANSACTIONS ON INSTRUMENTATION AND MEASUREMENT, IEEE SERVICE CENTER, PISCATAWAY, NJ, US, vol. 70, 25 February 2021 (2021-02-25), pages 1 - 12, XP011842007, ISSN: 0018-9456, [retrieved on 20210305], DOI: 10.1109/ TIM.2021.3062162**

• **Vicon Nexus Product Guide XP093342639**

• **XP093342651**

**Description**

The present invention finds application in the technical sector of the capture and analysis of the motion of an object for sports medical purposes and relates to the analysis of the athletic gesture of weightlifting by extracting the parameters related with the motion of the barbell. The parameters (forces, speed, acceleration, etc.) derive from the evolution of the position of the barbell in the space over time during the athletic gesture, regardless of the type of exercise and its purpose (competition or training).

According to the prior art, the most accurate solution for similar problems provides for using systems for capturing the motion of an object by means of optical devices, said systems being generally defined as motion capture (mocap) systems of optical type.

The mocap systems that are available on the market are formed of several cameras (typically 6 or more cameras) that frame a capture zone where optical markers are positioned, said markers usually consisting in retro-reflecting spheres or adhesives or Light Emitting Diodes (LEDs). The mocap system is capable of distinguishing the markers from the rest of the scene and of measuring the position of the markers in the space relative to a Cartesian reference system. The output of said systems is a set of vectors of 3 elements (Cartesian coordinates x, y, z) that describe the position of each marker detected at regular intervals (for example, 60 or 120 times/sec). By means of mathematical models and algorithms, it is generally possible to reconstruct the position and the direction of the objects where the markers are fixed.

The prior art includes models and algorithms for capturing the motion of the human body as a whole, including facial expressions. Moreover, techniques are provided for the tracking of arbitrary rigid bodies, according to which markers are suitably positioned on said bodies, typically in such a way that the position and the orientation of the objects admit only one solution starting from the positions detected of the markers.

With reference to the sports medical field, some models are especially suitable for different types of tests, such as a walking or cycling test. With specific reference to weightlifting, markers are disposed on the body of the athlete, together with a biomechanical model of the human body, and on the barbell. However, no specific model dedicated to such a purpose is provided.

Flores Francisco J et al "validity and reliability of a 3-axis accelerometer for measuring weightlifting movement" INTERNAL JOURNAL OF SPORTS SCIENCE & COACHING: A MULTI-SCIENCE PUBLICATION, discloses a space recognition and tracking system of a barbell according to the preamble of claim 1.

The purpose of the present invention is to disclose a space recognition and tracking system of a barbell that is simpler, yet equally effective, compared to the systems of the prior art.

Another purpose is to disclose such a space recognition and tracking system of a barbell that is versatile and easy to make and use.

These purposes are achieved according to the invention with the characteristics of the appended independent claims.

Advantageous embodiments of the invention appear from the dependent claims.

The system according to the invention is a combination of a positioning scheme of the markers on the barbell, a mathematical model of such a marker configuration and an algorithm capable of applying said mathematical model to the data of the measurements made by a mocap system.

The system of the invention provides a solution for positioning the markers on the barbell easily, without hindering the athlete who is using the barbell. Only four markers are provided, which can be applied by a non-specialized operator to any bar of the barbell used for competition or for training purposes. No marker is placed on the body of the athlete, who is completely free to move.

Together with the proposed algorithm, the system of the invention can be also applied to optical mocap systems that are much simpler and much cheaper than the ones of the prior art, being simply composed of two or three cameras exclusively disposed in front of the athlete who is lifting the weight.

The algorithm of the system according to the invention can recognize the barbell also when one of the four markers is not visible to the cameras or is not detected. Moreover, such an algorithm can track the barbell also when two markers are missing.

Additional features and advantages of the invention will be manifest from the detailed description of a preferred, yet not exclusive embodiment of the system, which is illustrated for illustrative, not limiting purposes, with reference to the appended figures, wherein:

Fig. 1 is an isometric view of the system according to the invention, which shows the barbell in three positions
Fig. 2 is a side view of the system of Fig. 1;
Fig. 3 is a front view of a barbell wherein optical markers are positioned according to a positioning scheme of the system according to the invention;
Fig. 4 is a perspective view of the barbell of Fig. 3;
Figs. 4A and 4B are two enlarged views of details of the barbell enclosed in the circles A and B of Fig. 4;

Fig. 4C is the same view as Fig. 4, which shows a Cartesian coordinate system with center in the center of the barbell;

Fig. 5 is a block diagram that diagrammatically shows the system according to the invention.

Fig. 6 is a diagram that shows the mathematical model of the barbell with the markers of the system according to the invention;

Fig. 7 is a block diagram that shows the algorithms of the system according to the invention.

Fig. 8 is a block diagram that shows the three markers search algorithm and the fourth marker search algorithm in detail;

Fig. 9 is a block diagram that shows a triplet matching procedure and a three- point alignment procedure;

Fig. 10 is a block diagram that shows a possible variant of the three-point alignment procedure;

Fig. 11 is a block diagram that shows the two-marker search algorithm in detail;

Fig. 12 is a block diagram that shows the couple matching procedure and the couple selection procedure; and

Fig. 13 is a flow diagram that shows the operation of the system according to the invention.

With reference to the Figures, the space recognition and tracking system of a barbell according to the invention is disclosed, which is generally indicated with reference numeral 100.

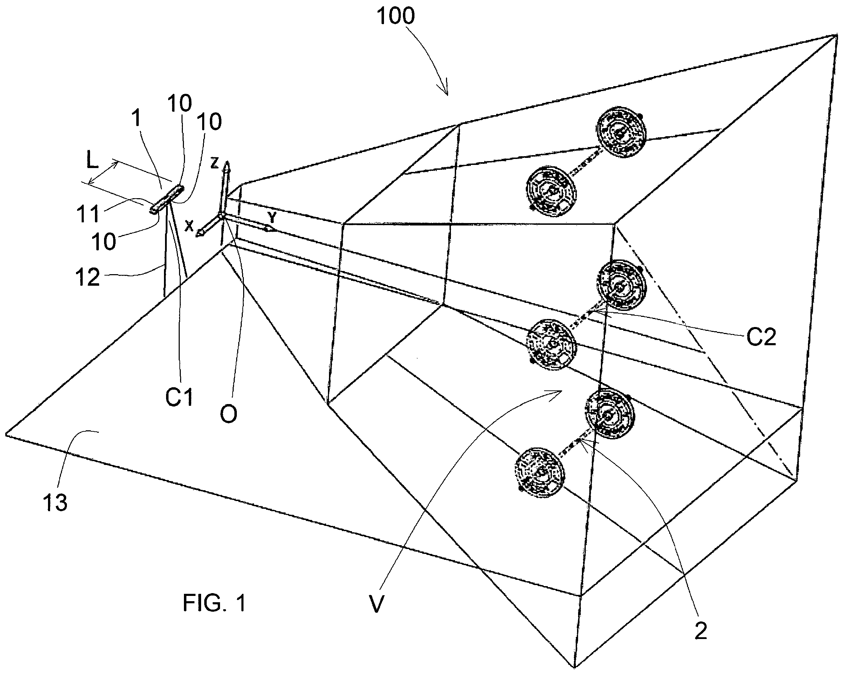

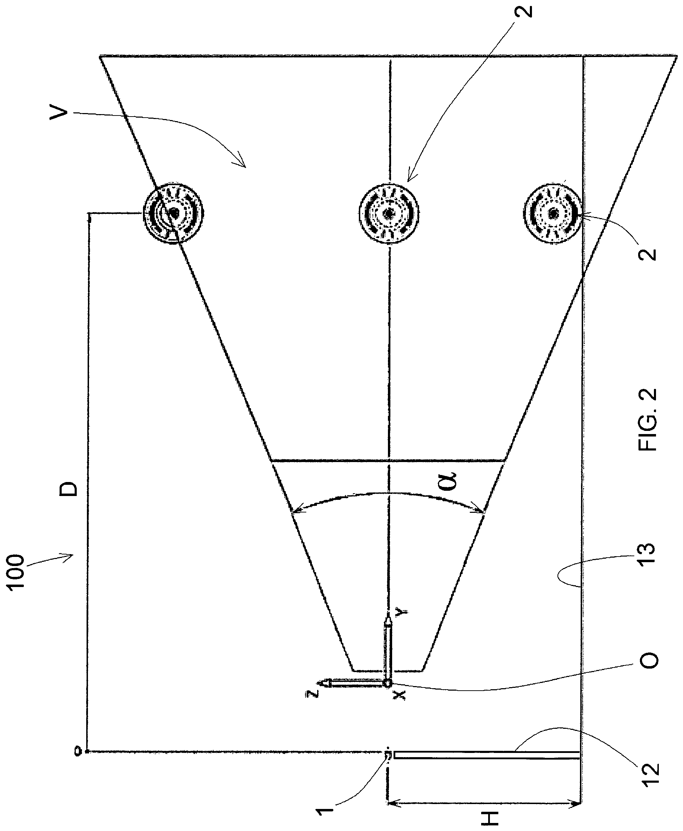

With reference to Figs. 1 and 2, the system (100) comprises a mocap system (1) of optical type. The mocap system (1) can be found on the market and therefore its detailed description is omitted.

The mocap system (1) comprises three cameras (10) integrated in a bar (11) with a length (L), for example 585 mm. The bar (11) is disposed on a stand (12) that is positioned on the floor (13) at a height (H) of approximately 1450 mm and at a distance (D) of approximately 4250mm from a capture zone (D) where the athlete performs exercises with a barbell (2). The stand (12) can be an ordinary stand for photographic cameras.

The bar (11) of the mocap system is disposed in front of the athlete with the barbell (2). Therefore, the barbell (2) is parallel to the bar (11) of the mocap system.

The bar (11) has a center (C1) that is substantially disposed on the sagittal plane of the athlete, when the athlete is standing, in the center of the barbell (2), ready to lift the barbell (2). Consequently, the center (C2) of the barbell (2) is disposed on the sagittal plane of the athlete, whereas the barbell (2) is parallel to the coronal plane of the athlete.

The capture zone (D) is a volume shaped as a truncated pyramid with a square or rectangular base, with axis passing through the center (c1) of the mocap system.

With reference to Fig. 1, a Cartesian coordinate system is provided, wherein:

- the axis X is parallel to the bar (11) of the mocap system;
- the origin (O) of the axes is disposed at the same height as the bar (11) on a horizontal axis orthogonal to the axis X and passing through the center (C1) of the bar (in Figs. 1 and 2 the origin (O) is proximal to the bar, but it could also be in the center (c1) of the bar);
- from the origin (O) the axis Z is directed vertically upwards; and
- according to the right-hand rule, from the origin (O) the axis Y is directed from the bar (11) towards the athlete and the barbell (2).

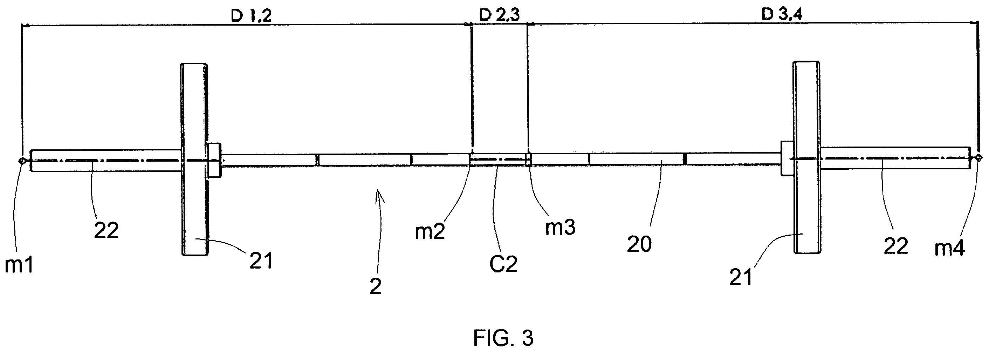

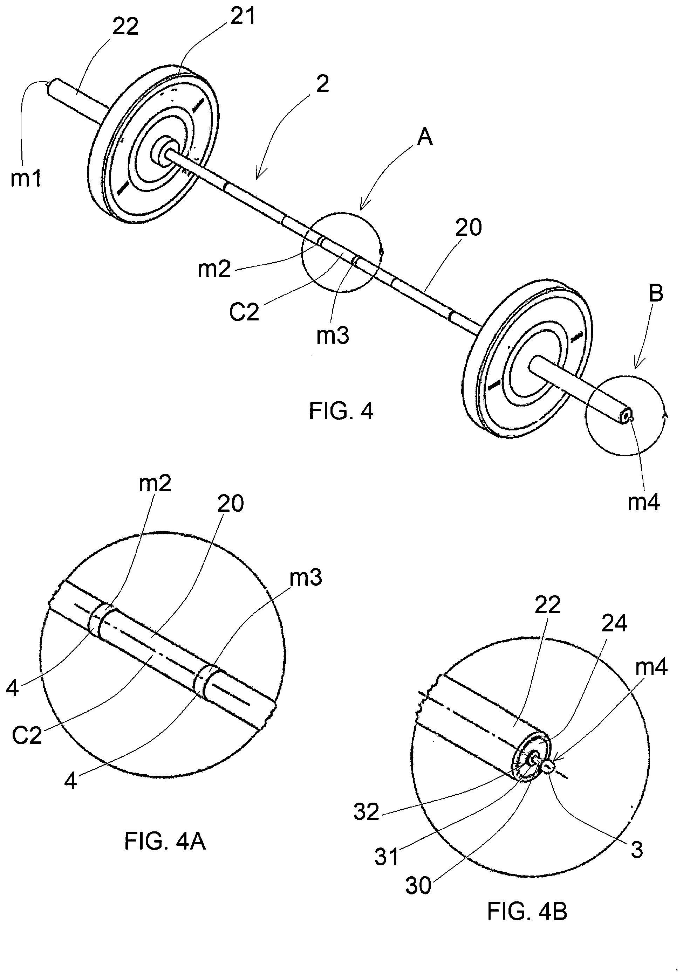

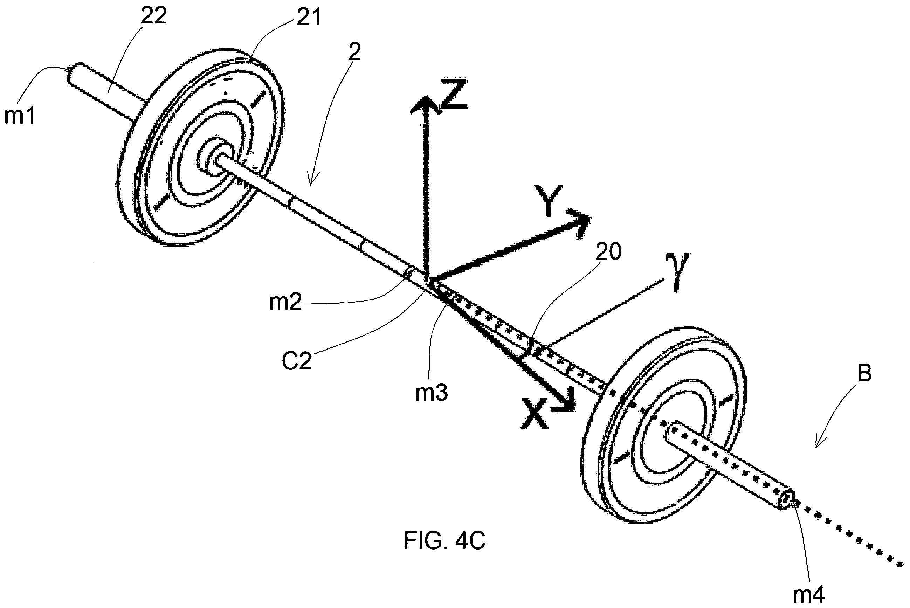

With reference to Figs. 3 and 4, the barbell (2) comprises a bar (20) where weights (21) in the form of disks are mounted. Two sleeves (22) are disposed at the ends of the bar (20) to block the weights (21) in position.

The system (100) comprises four markers (m1, m2, m3, m4) disposed as shown in Figs. 3 and 4. The markers comprise a first marker (m1), a second marker (m2), a third marker (m3) and a fourth marker (m4).

The first marker (m1) and the fourth marker (m4) are lateral markers disposed at the ends of the barbell (2). The second marker (m2) and the third marker (m3) are central markers disposed in a central zone of the barbell, in equidistant position from the center (C2) of the barbell.

With reference to Fig. 4B, the first marker (m3) and the fourth marker (m4) are of spherical type and comprise a sphere (3) made of retroreflecting material, with diameter of 12.7 mm.

The sphere (3) is supported by a stem (30) made of black plastic with height of 15mm. The stem (30) has a disk-like base (31) that is fixed at one end (24) of the barbell by means of bi-adhesive tape (32). The stem (30) is disposed in correspondence of the axis of the barbell.

As a general rule, the height of the stem (30) must be such to guarantee the visibility of the sphere (3) for the three cameras (10) of the mocap system, considering the volume of the sleeves (22) that are used to block the weights (21) and of the volume of the weights (21).

The center of the spheres (3) of the lateral markers must be disposed along the axis of the barbell (2). Said lateral markers (m1, m4) do not hinder the insertion or extraction of the weights (21) or the athlete in general.

With reference to Fig. 4A, the second marker (m2) and the third marker (m3) are two strips (4) of retro-reflecting adhesive tape, with width of 7 mm, wound as a loop around the bar (20) of the barbell, in a position where the athlete never places his/her hands during the exercises. The strips (4) of the central markers (m2, m3) are equidistant from the center (C2) of the barbell. Also in this case, the central markers (m2, m3) can be applied easily to any type of barbell and do not hinder the athlete.

Such a solution can be used in a capture zone of an optical mocap system composed of several cameras disposed around the capture zone and also with a simpler mocap system of optical type, like the one shown in the example of Figs. 1 and 2, which is composed of the three cameras (10) disposed on the bar (11) in front of the capture zone (Z) where the athlete performs the exercise.

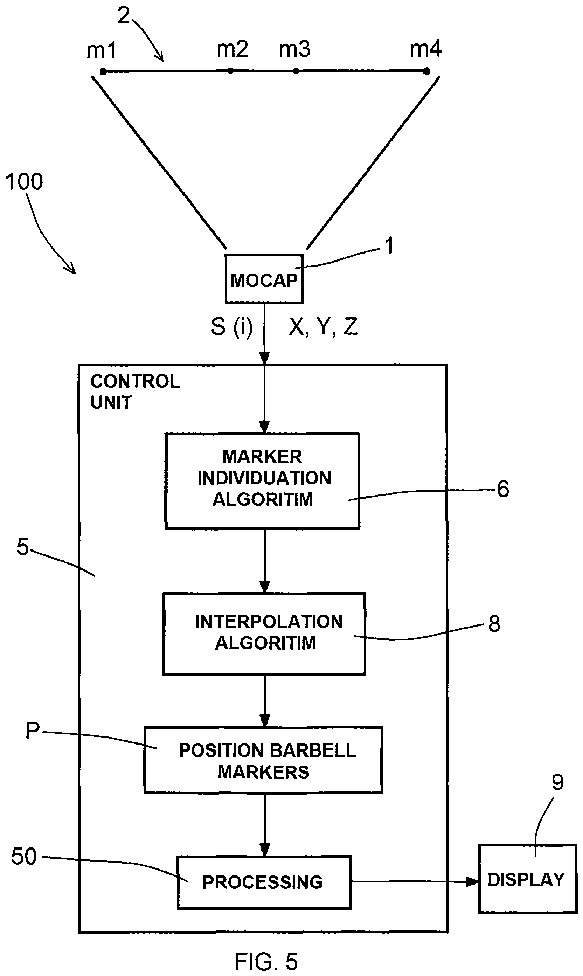

With reference to Fig. 5, the mocap system (1) is connected to a CPU (5) that is connected to a display (9) used to display useful parameters for the athlete who is lifting the weights. Said parameters can be the motion of the barbell in the space, the speed and the acceleration of the barbell during motion.

At regular intervals (called frames), the mocap system (1) provides a list of coordinates (x, y, z) of a set (s(i)) of points in the space, which include the markers (m1, m2, m3, m4) applied to the barbell (2). The frame frequency can be comprised between 60 and 180 Hz, preferably 120Hz.

The CPU (5) comprises:

- a marker identification algorithm (6) suitable for identifying three markers or two markers from the set (s(i)) of points detected by the mocap system (1), and
- an interpolation algorithm (8) suitable for identifying the other missing markers, in addition to the ones identified by the marker identification algorithm (6), from the set (S(i)) of points by means of interpolation. The interpolation algorithm (8) gives an exact position (P) of the four markers on the barbell.

After finding the position (P) of the four markers, the barbell (2) is reconstructed and processing means (50) of the CPU calculate the trajectory, the speed and the acceleration of the barbell. Said parameters are sent to the display (9) where they are displayed to the athlete.

This description continues with the illustration of examples of the marker identification algorithm (6) used to identify the position of three markers or of two markers of the four markers (m1, m2, m3, m4) fixed to the barbell (2) for each frame, in the presence of sources of uncertainty that are typical of the system. In fact, typically, the mocap system (1) has errors of a few millimeters.

It must be considered that not all markers may be detected in a frame, for example, because they are not visible to the cameras (10). Moreover, in addition to the markers (m1, m2, m3, m4) positioned on the barbell (2), the mocap system (1) may detect other points that are the result of undesired reflections from other objects.

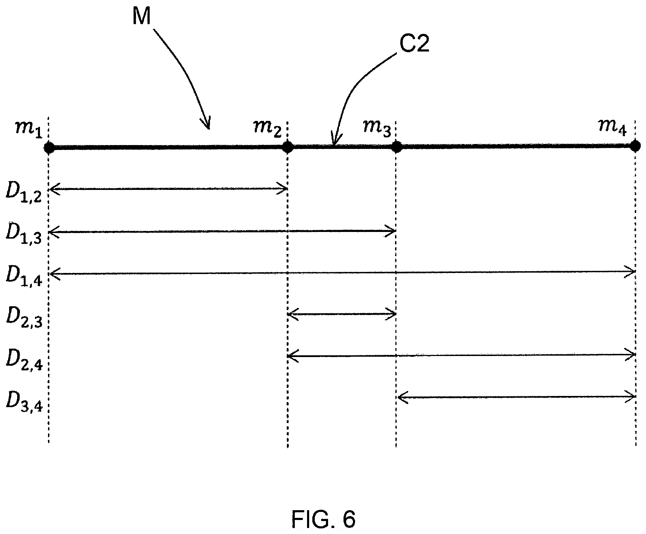

Fig. 6 is a diagrammatic view of a model (M) of the barbell with the markers (m1, m2, m3, m4) positioned as described. Said model (M) comprises:

- three segments aligned in the space, the ends of said segments being the position of the four markers ($m_1, m_2, m_3, m_4$) along the bar of the barbell, and
- the mutual distances ($D_{1,2}, D_{1,3}, D_{1,4}, D_{2,3}, D_{2,4}, D_{3,4}$) between the markers, which are known and measurable.

If the markers are positioned correctly, symmetrically relative to the center (C2) of the barbell, the result is the following equality

$$D_{1,2} \approx D_{3,4} \text{ and } D_{1,3} \approx D_{2,4} \qquad\qquad (U1)$$

With reference to Fig. 2, during the entire tracking time, the bar of the barbell is considered to make a movement that is contained within an angle ($\alpha$) on the plane (y, z) of the reference system, wherein the angle ($\alpha$) is lower than 90°.

With reference to Fig. 4C, if the coordinates have a center in the center (C2) of the barbell, during the entire tracking time, the bar of the barbell makes a movement that is contained within an angle ($\gamma$) relative to the axis X, wherein, in spite of oscillating around the X, the angle ($\gamma$) is still lower than 90°, regardless of the exercise performed by the athlete.

Such a condition is not a limiting condition, because during the typical use of the barbell, the angle ($\gamma$) is never higher than 90°. Therefore, it can be assumed that, by sorting the markers based on the ascending x, they are always shown in $m_1, m_2, m_3, m_4$.

A set (s(i)) of the positions (*x, y, z*) of points in the space detected in a given frame by the mocap system (1) is defined. Unless in case of uncertainty errors, the markers should be included in said points in the space. The set is defined with the following relation:

$$s(i) \in \mathbb{R}^3 \mid i \in \mathbb{N}, i \in [1, n]$$

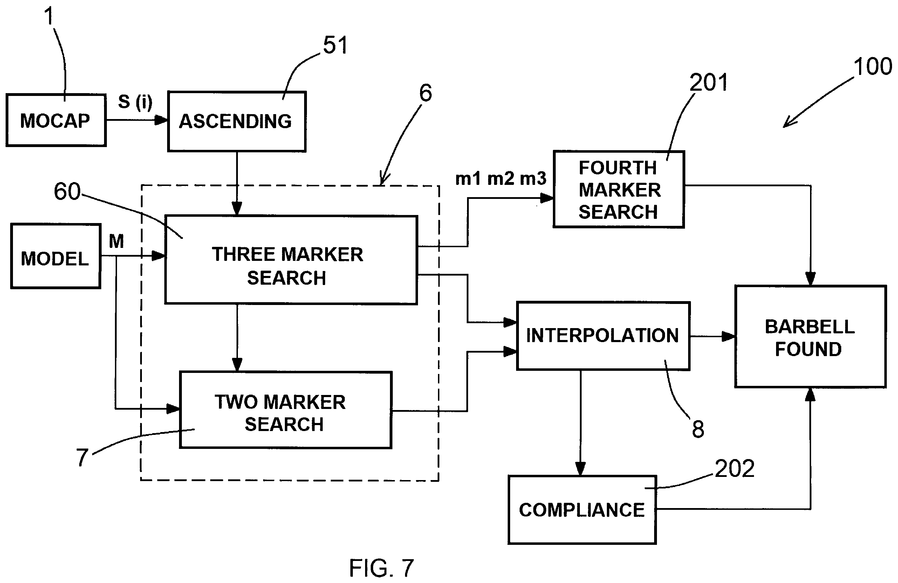

With reference to Fig. 7, after defining such a set s(i), firstly the coordinates are sorted based on the ascending x in such a way to obtain a sorted list

$$p(i) = Ascend_x(s(i))$$

where $Ascend_x$ is the sorting operation. To such a purpose, the system (100) comprises ascending sorting means (51).

After sorting the list p(i), the system continues with the marker identification algorithm (6).

The marker identification algorithm (6) comprises a three-marker search procedure (60) suitable for finding three points of the sorted list p(i) that correspond to three markers. Optionally, the marker identification algorithm (6) may comprise a two-marker search procedure (7) suitable for finding two points of the sorted list p(i) that correspond to two markers. The two-marker search procedure (7) is used when the three-marker search procedure (60) has not found the three markers.

If the three-marker search procedure (60) finds the first three markers (m1, m2, m3), the fourth marker (m4) can be found with a fourth-marker search procedure (201). In the other cases, the missing marker is found with the interpolation algorithm (8).

If the two-marker search procedure (7) finds two markers, the other two missing markers are found by the interpolation algorithm (8). In such a case, a compliance procedure (202) is performed to check that the two missing markers found with the interpolation algorithm (8) are actually the markers of the barbell.

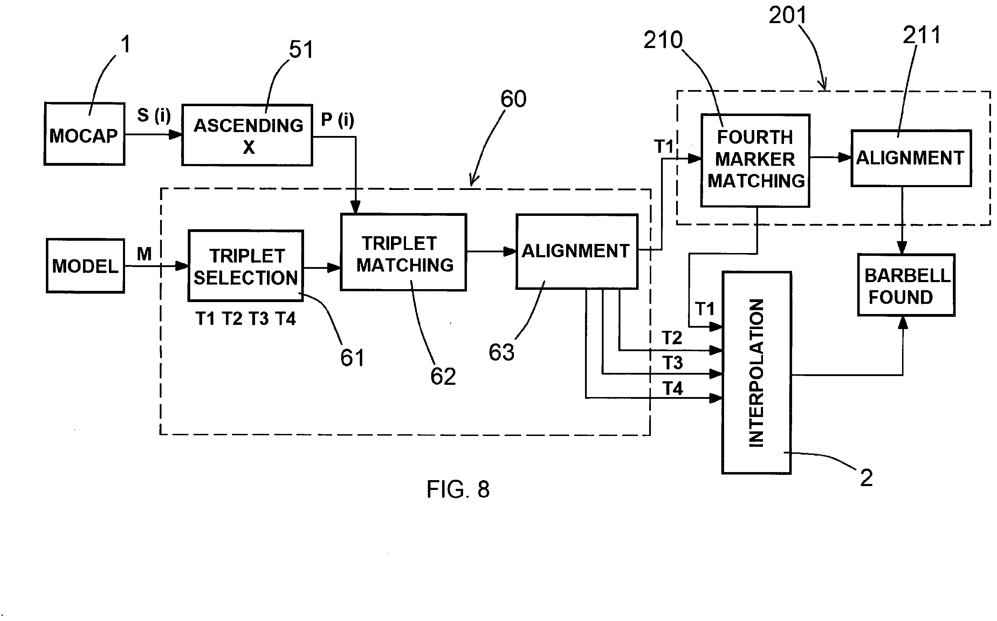

With reference to Fig. 8, the three-marker search procedure (60) is described in detail. The three-marker search procedure (60) must identify a first triplet of points $\{P_a, P_b, P_c\}$ that simultaneously comply with the two conditions of mutual distance (U1) and alignment of the points of said first triplet of points, comparing the first triplet of points with all possible sorted triplets of the markers of the model (M). The possible triplets obtained from mutual combinations of the four markers of the model (M) are only four:

$\{T1(m_1, m_2, m_3), T2(m_1, m_2, m_4), T3(m_1, m_3, m_4), T4(m_2, m_3, m_4)\}$.

If the distance between $P_a$ and $P_b$ is such that $d_{a,b} \approx D_{1,2}$ and the distance between $P_b$ and $P_c$ is such that $d_{b,c} \approx D_{2,4}$ and the points $P_a, P_b, P_c$ also comply with the alignment condition, it can be assumed that the first triplet of points (Pa, Pb, Pc) corresponds to the triplet of markers $T_2$.

The distance between two points of a triplet is calculated as the Euclidean distance between two points in the space.

$$d(P_1, P_2) = \sqrt{(x_2 - x_1)^2 + (y_2 - y_1)^2 + (z_2 - z_1)^2}$$

The correspondence between the measured distance and the expected distance is considered within a range that considers a measurement uncertainty ($\Delta_d$)

$$d = D \pm \Delta_d.$$

The alignment of the three points of the triplet can be estimated by calculating the height (h) of the triangle formed by the three points of the triplet in the space. The points are considered to be aligned if such a height of the triangle is lower than a threshold value ($\Delta_h$) that considers the measurement uncertainty of the system and the bending of the bar of the barbell during the lifting movement.

With reference to Fig. 8, the mocap system (1) detects a frame that contains a set (S(i)) of coordinates of points in the space, relative to a Cartesian coordinate system.

Sorting means (51) sort the set (S(i)) of the x coordinates in ascending order, in such a way to obtain a sorted list (P(i)).

Triplet selection means (61) select a first reference triplet from the four possible reference triplets (T1, T2, T3, T4) of the model (M). wherein a first triplet (T1) comprises the first three markers (m1, m2, m3), a second triplet (T2) comprises the first, third and fourth marker (m1, m3, m4), a third triplet (T3) comprises the second, third and fourth marker (m2, m3, m4) and a fourth triplet comprises the first, second and fourth marker (m1, m2, m4)

Triplet matching means (62) check if three points of the sorted list p(i) meet the three points of the selected triplet.

If the triplet matching means (62) find a triplet, alignment means (63) check that the three points of the triplet are aligned.

If the alignment means (63) find that the points of the first triplet (T1) are aligned, the fourth-marker search procedure (201) finds the fourth marker (m4), which is the missing marker. The fourth-marker search procedure (201) comprises:

- fourth-marker matching means (210) that check if a point of the sorted list p(i) meets the fourth marker, and

- alignment means (211) that check if the point that meets the fourth marker is aligned with two points of the first triplet.

If the fourth-marker matching means (210) do not find any point of the sorted list p(i) that meets the fourth marker, the fourth marker is calculated by the interpolation algorithm (8).

If the alignment means (211) determine that the points that meets the fourth marker is not aligned with two points of the first triplet, the fourth marker is calculated by the interpolation algorithm (8).

In case the three-marker search procedure finds the second, or the third or the fourth triplet, then the missing marker is calculated by the interpolation algorithm.

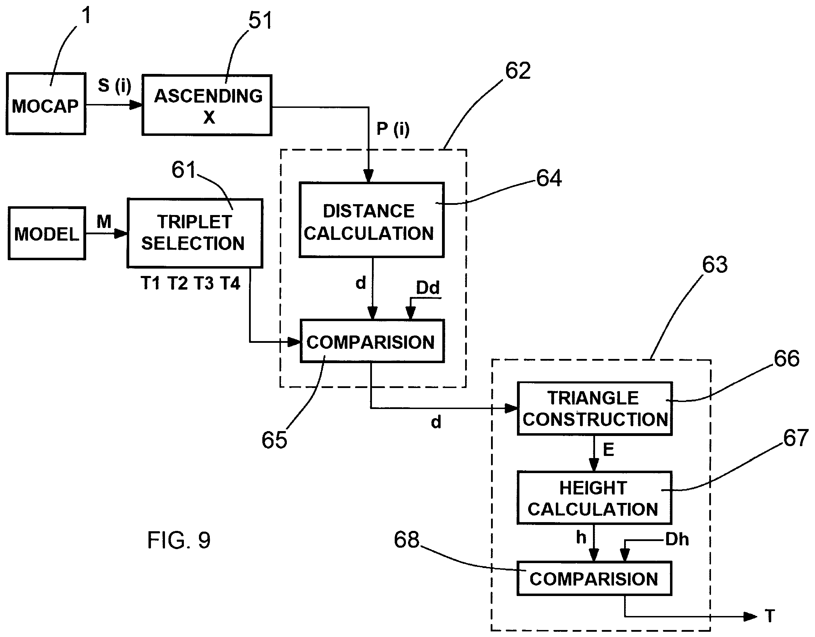

With reference to Fig. 9, the triplet matching means (62) of the three-marker search procedure comprise:

- distance calculation means (64) to calculate all possible distances (d) between two points of the sorted list p(i)
- first comparison means (65) to compare the distances (d) calculated by the distance calculation means (64) with known distances (D12, D13, D14, D23, D24, D34) of the reference triplet (T1 or T2 or T3 or T4) that are being searched and check if said distances are equal within an uncertainty margin ($\Delta$d).

For example, the reference triplet is the first triplet (T1). If a distance between two points of the sorted list p(i) is equal to $D_{1,3}$, a distance is searched in the sorted list p(i) between two points that is equal to $D_{1,2}$ in such a way to identify the three points that respect the equality (U1).

The three-marker search procedure begins by selecting the first point of the sorted list, continues by calculating its distance from all the other points and proceeds to the successive point of the sorted list, if no correspondence is found with the distances of the first reference triplet of the model. If the search is not successful, the successive starting point is selected from the sorted list and the search is continued until a correspondence is found or until the points are finished.

If a correspondence between the distances is found, and three points that may be three markers are identified, then the alignment means (63) check the alignment of the three points.

The alignment means (63) comprise:

- triangle construction means (66) to construct a triangle (E) with the three points found,
- height calculation means (67) to calculate the height (h) of the triangle (E) constructed by the triangle construction means (66),
- second comparison means (68) to compare the calculated height (h) with a threshold value ($\Delta$h).

If the second comparison means (68) determine that the height of the triangle is lower than the threshold value ($\Delta_h$), the three points are considered to be aligned and therefore they correspond to three markers of the barbell.

On the contrary, if the second comparison means (68) determine that the points are not aligned, the system returns to the preceding distance calculation step with the distance calculation means (64).

If the reference triplet is not identified in any possible combination of points, the system searches for a successive reference triplet and returns to the triplet selection step (61).

Three different cases are possible at the end of the three-marker search procedure (60).

Case (a): a correspondence with the first triplet T1($m_1$, $m_2$, $m_3$) is found.

Case (b): a correspondence with one of the other three triplets T2, T3 or T4 is found.

Case (c): no correspondence is found.

In case (a), the fourth marker (m4) is searched with the fourth-marker matching means (210) that search for a correspondence of the distance $D_{1,4}$ between the first marker found and the remaining points in the sorted list. If a correspondence is found, the alignment means (211) alternately check the alignment of one of the two triplets T2 or T3. In case of alignment, also the fourth marker of the barbell is considered as found.

If none of the remaining points in the sorted list complies with the two preceding requirements, only the first triplet T1 is considered as found and the fourth point that corresponds to the missing marker is identified by means of the interpolation algorithm (8).

In case (b), the interpolation algorithm (8) calculates the missing marker.

In case (c), the system continues with the two-marker search algorithm (7).

The following simplified procedure can be used to increase the calculation speed and simplify the alignment algorithm.

Let's assume that the alignment of the three points $P_a$, $P_b$, $P_c$ is to be checked and that $d_{a,b}$, $d_{b,c}$, $d_{a,c}$ are the distances respectively calculated between $P_a$ and $P_b$ between $P_b$ and $P_c$ and between $P_a$ and $P_c$.

The three points can be considered to be aligned in the space if the following equality

$$d_{a,b} + d_{b,c} = d_{a,c} \pm \Delta_l$$  (U2) is respected.

where the threshold value $\Delta_l$ considers the measurement uncertainty and the possible bending of the barbell.

The search within a frame is successful if the algorithm finds at least one triplet of points that respect the equality (U2) that also guarantees the alignment between the three points.

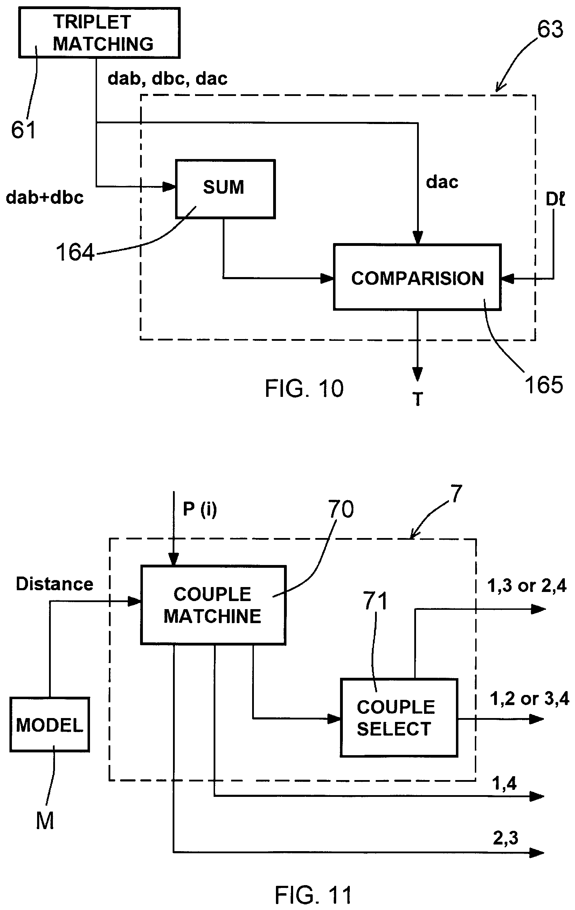

Fig. 10 shows a second embodiment of the alignment means (63).

The triplet matching means (61) have found three points (Pa, Pb, Pb) that meet a triplet and therefore have calculated the distances $(d_{a,b}; d_{b,c}; d_{a,c})$ between the three points.

The alignment means (63) must check if the three points (Pa, Pb, Pb) are aligned. To that purpose, the alignment means (63) comprise:

- adder means (164) to add two distances $(d_{a,b} + d_{b,c})$, and
- comparator means (165) to compare the sum of the two distances $(d_{a,b} + d_{b,c})$ calculated by the adder means with the other distance $(d_{a,c})$ of the three points, plus or minus a threshold value $(\Delta_l)$ that considers the measurement uncertainty of the mocap system and the bending of the barbell.

The comparator means (165) give the three points that correspond to the selected triplet and therefore to three markers, if the sum of the two distances $(d_{a,b} + d_{b,c})$ is equal to the other distance $(d_{a,c})$ plus or minus the threshold value $(\Delta_l)$.

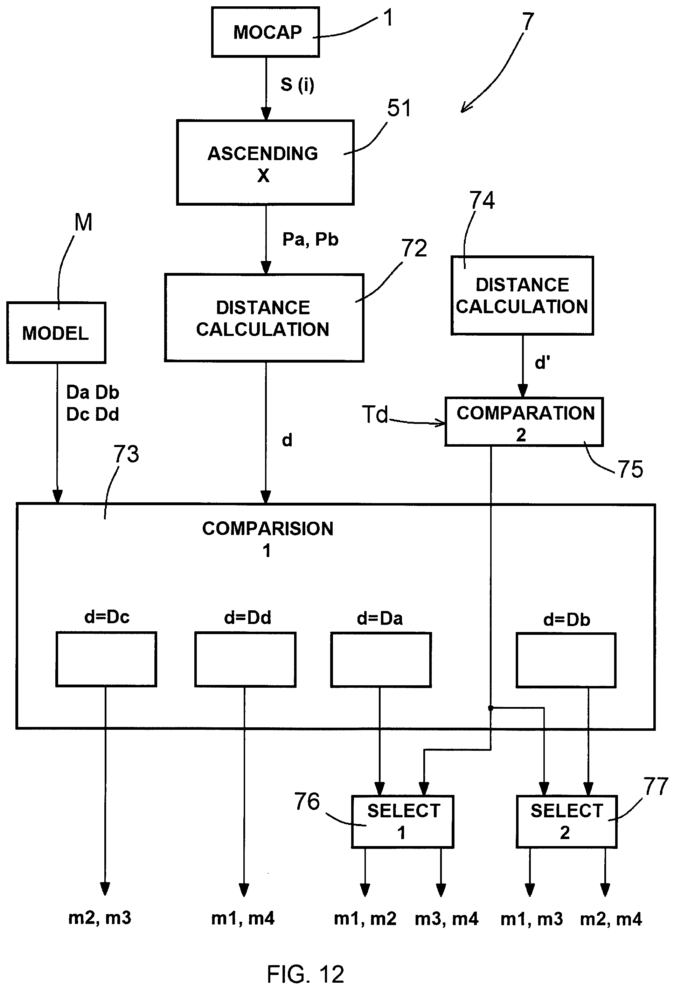

With reference to Figs. 11 and 12, the two-marker search algorithm (7) is described. The two-marker search algorithm adds additional conditions that also depend on the preceding frame, and not only on the current frame.

From the model (M), which is shown in Fig. 6, four different distances are possible between the four markers:

$$D_A = D_{1,2} \approx D_{3,4}; D_B = D_{1,3} \approx D_{2,4}; D_C = D_{2,3}; D_D = D_{1,4} \ .$$

The distances $D_A, D_B, D_C, D_D$ are known because they have been measured and stored in a memory of the CPU (5).

Let's suppose that $P_a, P_b$ are two points of the sorted list p(i) of points.

If the distance between Pa and Pb is equal to Dc, the points correspond to the second and the third marker (m2, m3).

If the distance between Pa and Pb is equal to $D_D$, the points correspond to the first and the fourth marker (m1, m4).

If the distance between Pa and Pb is equal to $D_A$ it is necessary to discriminate if the couple of points (Pa, Pb) is the couple of markers $(m_1, m_2)$ or $(m_3, m_4)$.

If the distance between Pa and Pb is equal to $D_B$ it is necessary to discriminate if the couple of points (Pa, Pb) is the couple of markers $(m_1, m_3)$ or $(m_2, m_4)$.

If the distance between Pa and Pb is equal to $D_A$ or to $D_B$, the two-marker search algorithm calculates a distance (d') between the point in the most leftward position between Pa and Pb (lower x coordinate) and the position of the first marker (m1) estimated in the preceding frame; if the distance (d') is lower than a threshold value $T_d$ that considers the maximum possible displacement from a point of the barbell in one frame, it is assumed that the couple found Pa and Pb is the one that includes the first marker $m_1$, otherwise it is the other couple without the first marker.

If the distance (d) between Pa and Pb is equal to $D_A$, Pa being the point between Pa and Pb with the lower x coordinate, if the distance (d') between the first marker (m1) of the preceding frame and Px is lower than the threshold value Td, then the couple (Pa, Pb) corresponds to the first and second marker (m1, m2), otherwise the couple (Pa, Pb) corresponds to the third and fourth marker (m3, m4).

If the distance (d) between Pa and Pb is equal to $D_B$, Pa being the point between Pa and Pb with the lower x coordinate, if the distance (d') between the first marker (m1) of the preceding frame and Pa is lower than the threshold value Td, then the couple (Pa, Pb) corresponds to the first and third marker (m1, m3), otherwise the couple (Pa, Pb) corresponds to the second and fourth marker (m2, m4).

After determining the reference marker couple, the positions of the two missing markers are constructed by interpolation with the interpolation algorithm (8).

Now, in order to discriminate a false positive, the compliance procedure (202) checks that the distance between each marker obtained and its corresponding marker in the preceding frame is lower than the threshold value $T_d$; if all four markers comply with said condition, the result of the interpolation is considered to be valid.

With reference to Fig. 11, the two-marker search algorithm (7) comprises:

- couple matching means (70) to check if two points of the sorted list p(i) meet a couple of markers of the model (M),
- couple selection means (71) to select a couple of points found by the couple matching means (70) that correspond to two markers.

With reference to Fig. 12, the couple matching means (70) comprise:

- first distance calculation means (71) to calculate the distance (d) between the two points (Pa, Pb) of the sorted list p(i).
- first comparison means (73) to compare the distance (d) calculated between two points (Pa, Pb) of the sorted list with four known distances ($D_A$, $D_B$, $D_C$, $D_D$) that have been measured based on the position of the markers (m1, m2, m3, m4) on the barbell.

The first known distance $D_A$ is equal to the distance between the first and the second marker, which is equal to the distance between the third and the fourth marker.

The second known distance $D_B$ is equal to the distance between the first and the third marker, which is equal to the distance between the second and the fourth marker.

The third known distance Dc is equal to the distance between the second and the third marker.

The fourth known distance $D_B$ is equal to the distance between the first and the fourth marker.

If d=$D_C$, the two points (Pa, Pb) correspond to the second and third marker (m2, m3).

If d=$D_D$, the two points (Pa, Pb) correspond to the first and fourth marker (m1, m4).

The two-marker search algorithm (7) comprises:

- second distance calculation means (74) to calculate a distance (d') between the position of the first marker (m1) found in the preceding frame and the first point (Pa) of the couple of points with the lower x coordinate, and
- second comparison means (75) to compare the distance (d') with a threshold value (Td) that considers the maximum possible displacement from a point of the barbell in one frame.

If d = $D_A$, if d' < Td, the two points (Pa, Pb) correspond to the first and second marker (m1, m2); on the contrary, if d' ≥ Td, the two points (Pa, Pb) correspond to the third and fourth marker (m3, m4).

If d = $D_B$, if d' < Td, the two points (Pa, Pb) correspond to the first and third marker (m1, m3); on the contrary, if d' ≥ Td, the two points (Pa, Pb) correspond to the second and fourth marker (m2, m4).

The couple selection means (71) comprise:

- a first selector/discriminator (76) to select the couple (m1, m2) or (m3, m4), when d=$D_A$, and
- a second selector/discriminator (77) to select the couple (m1, m3) or (m2, m4), when d=$D_B$.

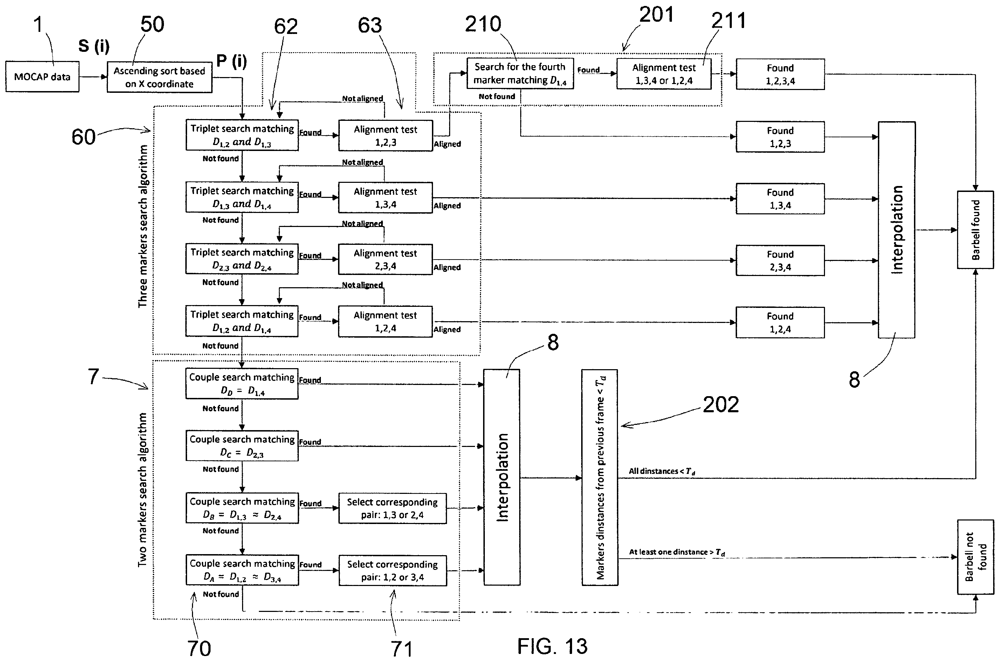

Fig. 13 is a flow diagram that shows the operation of the system according to the invention.

Since four markers are to be found, after finding three points with the three-marker search algorithm (60) or two points with the two-marker search algorithm (7), which correspond to three or two markers, the position of the missing marker or of the two missing markers can be calculated by means of interpolation from the other three points or two points found, with the interpolation algorithm (8).

In its simplest form, the interpolation algorithm (8) approximates the barbell to a rectilinear segment. With the Ordinary Least Squares method, the interpolation algorithm (8) makes a linear regression of the positions of the markers found by the three-marker search algorithm (60) or by the two-marker search algorithm (7). The coefficients obtained from the linear regression, together with the known distances between the markers (obtained from the model (M)), are used to calculate the missing points.

Following is a possible implementation of the interpolation algorithm (8).

The barbell (2) is approximated to a rectilinear segment that lies on a straight line. A variable d is considered as the distance of any point p of the straight line from the origin of the barbell fixed in its marker $m_1$. The coordinate of said point in the space is given by its orthogonal projection on three reference axes X, Y and Z. It can be demonstrated that the functions that relate the distance d to its coordinates x, y, z are linear in the form:

$$x = k_x d + x_0; \ \ y = k_y d + y_0; \ \ z = k_z d + z_0$$

the problem can be decomposed in three linear regression problems of the variables x, y and z in the domain d of the distances from the origin of the barbell.

Then the coefficients $k_x$, $k_y$, $k_z$ and $x_0$, $y_0$, $z_0$ are calculated.

Each problem is in the form $t = kd + t_0$ wherein the coefficients can be calculated with:

$$k = \frac{N \sum (d_i t_i) - \sum d_i \sum t_i}{N \sum (d_i^2) - (\sum d_i)^2};$$

$$t_0 = \frac{\sum t_i \sum(d_i^2) - \sum(d_i)\sum(d_i t_i)}{N \sum(d_i^2) - (\sum d_i)^2}$$

All coefficients $k_x$, $k_y$, $k_z$ and $x_0$, $y_0$, $z_0$ can be calculated with these relations.

In order to accelerate the calculation, it can be approximated that the barbell passes exactly through the first one of the detected markers (the one with the lower x coordinate), indicated with $p_0$ moving the origin $d_0$ to said marker. In such a way, being d = 0 , in this point $x_0$, $y_0$, $z_0$ are exactly equal to the coordinates of $p_0$ and the calculation is exclusively limited to the angular coefficients $k_x$, $k_y$, $k_z$.

The distances from the origin $d_0$ are known from the model (M) and exactly correspond to the distances between two markers. With the known distances and the angular coefficients, the coordinates of the other points that identify the barbell can be calculated easily.

Let's assume, for instance, that $d_0$ is fixed in the point $P_2$ that corresponds to the marker $m_2$; in such a case, it is obtained:

$$P_1 = -D_{1,2}\big(k_x, k_y, k_z\big) + P_2;$$

$$P_3 = D_{2,3}\big(k_x, k_y, k_z\big) + P_2;$$

$$P_4 = D_{2,4}\big(k_x, k_y, k_z\big) + P_2.$$

From the preceding description it appears manifest that the system (100) according to the invention achieves the purposes of the invention.

The object of the invention can undergo several modifications and variants, all of them falling within the inventive concept expressed in the appended claims. All details can be replaced by other technically equivalent elements, and the materials can be different according to the needs, without leaving the protection scope of the present invention. Although the object of the invention has been described with specific reference to the appended figures, the reference numerals used in the description and in the claims are meant to improve the understanding of the invention and are not a limitation in the protection scope of the invention.

**Claims**

1. Space recognition and tracking system (100) of a barbell, comprising:

   - a barbell (2) suitable for supporting weights (21);
   - a first marker (m1), a second marker (m2), a third marker (m3) and a fourth marker (m4) disposed in the barbell; wherein the first marker (m1) and the fourth (m4) are lateral markers disposed at the ends of the barbell (2), and the second marker (m2) and the third marker (m3) are central markers disposed in a central zone of the barbell, in equidistant position from a center (C2) of the barbell;
   - a motion capture (mocap) system (1) of optical type, disposed in front of the barbell in such a way to frame a capture zone (V) wherein a user uses the barbell, and capture frames composed of a set (s(i)) of coordinates of points in the space relative to a Cartesian coordinate system, which include the positions of the markers of the barbell;
   - a CPU (5) connected to said mocap system (1) to receive and analyze said set s(i)) of coordinates of points;
   - a display (9) connected to said CPU (5) to display parameters relative to the motion of said barbell in said capture zone (V);
   said CPU (5) is configured to perform:

      - a marker identification algorithm (6) suitably configured to identify three or two points of the set (s(i)) of points that correspond to the positions of respective markers, and
      - an interpolation algorithm (8) suitably configured to interpolate the points detected by said marker identification algorithm (6) in such a way to find the position of the missing marker or markers;

   **characterized in that**:

wherein said marker identification algorithm (6) comprises ascending ordering means (51) configured to order the set (s(i)) of coordinates of points in ascending order of the coordinates x, in such a way to obtain a sorted list (p(i)), and
said marker identification algorithm (6) also comprises:

- a three-marker search procedure (60) suitable for finding three points of the sorted list p(i) that correspond to three markers; and
- a two-marker search procedure (7) suitable for finding two points of the sorted list p(i) that correspond to two markers; the two-marker search procedure (7) being used when the three-marker search procedure (60) has not found the three markers.

2. The system (100) of claim 1, wherein the first marker (m3) and the fourth marker (m4) are of spherical type and comprise a sphere (3) made of retroreflecting material.

3. The system (100) of claim 2, wherein said sphere (3) is supported by a stem (30) made of black plastic provided with a disk-shaped base (31) that is fixed at one end (24) of the barbell by means of a biadhesive tape (32).

4. The system (100) of any one of the preceding claims, wherein the second marker (m2) and the third marker (m3) comprise a strip (4) of retroreflecting adhesive tape that is wound as a loop around the barbell (2).

5. The system (100) of any one of the preceding claims, wherein the mocap system (1) comprises at least two cameras (10).

6. The system (100) of claim 5, wherein the mocap system (1) comprises three cameras (10) integrated in a bar (11) supported by a stand (12).

7. The system (100) of any one of the preceding claims, wherein the mocap system (1) is suitably configured to acquire frames with a frequency comprised between 60 and 180 Hz.

8. The system (100) of any one of the preceding claims, wherein said three-marker search procedure (60) comprises:

- triplet selection means (61) configured to select a reference triplet from four possible reference triplets (T1, T2, T3, T4) of the model (M), wherein a first triplet (T1) comprises the first three markers (m1, m2, m3), a second triplet (T2) comprises the first, third and fourth marker (m1, m3, m4), a third triplet (T3) comprises the second, third and fourth marker (m2, m3, m4) and a fourth triplet comprises the first, second and fourth marker (m1, m2, m4),
- triplet matching means (62) configured to check if three points of the sorted list p(i) meet the three points of the triplet selected by the triplet selection means (61), and
- alignment means (63) configured to check the alignment of three points of the sorted list found by said triplet matching means (62).

9. The system (100) of claim 8, wherein said triplet matching means (62) comprise:

- distance calculation means (64) configured to calculate all the possible distances (d) between two points of the sorted list p(i), and
- first comparison means (65) configured to compare the distances (d) calculated by the distance calculation means (64) with known distances (D12, D13, D14, D23, D24, D34) of the reference triplet (T1 or T2 or T3 or T4) that is being searched and check if said distances are equal within an uncertainty margin ($\Delta d$).

10. The system (100) of claim 9, wherein said alignment means (63) comprise:

- triangle construction means (66) configured to construct a triangle (E) with the three points found by the triplet found by the triplet matching means (62),
- height calculation means (67) configured to calculate the height (h) of the triangle (E) constructed by the triangle construction means (66), and
- second comparison means (68) configured to compare the calculated height (h) with a threshold value ($\Delta h$).

11. The system (100) of claim 9, wherein said alignment means (63) comprise:

- adder means (164) configured to add two distances ($d_{a,b} + d_{b,c}$) calculated by said distance calculation means (64), and
- comparator means (165) configured to compare the sum of the two distances ($d_{a,b} + d_{b,c}$) calculated by the adder means (164) with the other distance ($d_{a,c}$) of the three points found by the triplet matching means, plus or minus a threshold value ($\Delta_l$) that considers the measurement uncertainty of the mocap system and of the bending of the barbell.

12. The system (100) of any one of the preceding claims, wherein the two-marker search algorithm (7) comprises:

- couple matching means (70) configured to check if two points of the sorted list (i) meet a couple of markers of the model (M), and
- couple selection means (71) configured to select a couple of points found by the couple matching means (70) that correspond to two markers;

said couple matching means (70) comprise:

- first distance calculation means (71) configured to calculate the distance (d) between the two points (Pa, Pb) of the sorted list p(i),
- first comparison means (73) configured to compare the distance (d) calculated between two points (Pa, Pb) of the sorted list with four known distances ($D_A$, $D_B$, $D_C$, $D_D$) that have been measured based on the position of the markers (m1, m2, m3, m4) on the barbell;

said two-marker search algorithm (7) comprises:

- second distance calculation means (74) configured to calculate a distance (d') between the position of the first marker (m1) found in the preceding frame and the first point (Pa) of the couple of points that has the lowest coordinate x, and
- second comparison means (75) configured to compare the distance (d') with a threshold value (Td) that considers the maximum displacement from a point of the barbell in a frame.

**Patentansprüche**

1. Raumerkennungs- und Trackingsystem (100) einer Langhantel, umfassend:

- eine Langhantel (2), die zum Heben von Gewichten (21) bestimmt ist;
- ein erster Marker (m1), ein zweiter Marker (m2), ein dritter Marker (m3) und ein vierter Marker (m4), die in der Langhantel angeordnet sind; wobei der erste Marker (m1) und der vierte Marker (m4) seitliche Marker sind, die an den Enden der Langhantel (2) angeordnet sind, und der zweite Marker (m2) und der dritte Marker (m3) zentrale Marker sind, die in einem zentralen Bereich der Langhantel, von einem Mittelpunkt (C2) der Langhantel gleich beabstandet angeordnet sind;
- ein Bewegungserfassungssystem (mocap) (1) vom optischen Typ, das vor der Langhantel angeordnet ist, um eine Erfassungszone aufzunehmen, in der ein Benutzer die Langhantel benutzt, und Einzelbilder zu erfassen, die aus einem Satz (s(i)) von Koordinatenpunkten im Raum in Bezug auf ein kartesisches Koordinatensystem bestehen, die die Positionen der Marker der Langhantel einschließen;
- eine Steuereinheit (5), die mit dem Bewegungserfassungssystem (1) verbunden ist, um den Satz (s(i)) von Koordinatenpunkten zu empfangen und zu analysieren;
- ein Display (9), das mit der Steuereinheit (5) verbunden ist, um Parameter in Bezug auf die Bewegung der Langhantel in der Erfassungszone (V) anzuzeigen;
die Steuereinheit (5) ist konfiguriert zum Ausführen:

- eines Marker-Identifzierungsalgorithmus (6), der konfiguriert ist zur Identifizierung von drei oder mehr Punkten des Satzes (s(i)) von Punkten, die den Positionen jeweiliger Marker entsprechen, und
- eines Interpolationsalgorithmus (8), der konfiguriert ist zur Interpolation der vom Marker-Identifzierungsalgorithmus (6) erfassten Punkte, um die Position des fehlenden Markers oder der fehlenden Marker zu finden;

**dadurch gekennzeichnet, dass**
der Marker-Identifzierungsalgorithmus (6) Ordnungsmittel (51) umfasst, die konfiguriert sind, um den Satz (s(i)) von Koordinatenpunkten in aufsteigender Reihenfolge der x-Koordinaten so zu ordnen, dass eine geordnete Liste (p(i)) erhalten wird, und

der Marker-Identifzierungsalgorithmus (6) ferner umfasst:

- ein Drei-Marker-Suchverfahren (60), das dazu geeignet ist, drei Punkte der geordneten Liste p(i) zu finden, die drei Markern entsprechen; und
- ein Zwei-Marker-Suchverfahren (7), das dazu geeignet ist, zwei Punkte der geordneten Liste p(i) zu finden, die zwei Markern entsprechen; wobei das Zwei-Marker-Suchverfahren (7) verwendet wird, wenn das Drei-Marker-Suchverfahren (60) die drei Marker nicht gefunden hat.

2. System (100) nach Anspruch 1, wobei der erste Marker (m3) und der vierte Marker (m4) vom kugelförmigen Typ sind und eine Kugel (3) aus retroreflektierendem Material umfassen.

3. System (100) nach Anspruch 2, wobei die Kugel (3) von einem Stiel (30) aus schwarzem Kunststoff getragen wird, der mit einer scheibenförmigen Basis (31) versehen ist, die an einem Ende (24) der Langhantel mit doppelseitigem Klebeband (32) befestigt ist.

4. System (100) nach einem der vorstehenden Ansprüche, wobei der zweite Marker (m2) und der dritte Marker (m3) einen Streifen (4) aus retroreflektierendem Klebeband umfassen, das ringförmig um die Langhantel (2) gewickelt ist.

5. System (100) nach einem der vorstehenden Ansprüche, wobei das Bewegungserfassungssystem (1) mindestens zwei Kameras (10) umfasst.

6. System (100) nach Anspruch 5, wobei das Bewegungserfassungssystem (1) drei Kameras (10) umfasst, die in einer Stange (11) integriert sind, die von einem Gestell (12) getragen wird.

7. System (100) nach einem der vorstehenden Ansprüche, wobei das Bewegungserfassungssystem (1) so konfiguriert ist, dass es Einzelbilder mit einer Frequenz von 60 bis 180 Hz erfasst.

8. System (100) nach einem der vorstehenden Ansprüche, wobei das Drei-Marker-Suchverfahren (60) umfasst:

- Triplet-Auswahlmittel (61), die konfiguriert sind, um ein Referenz-Triplet aus vier möglichen Referenz-Triplets (T1, T2, T3, T4) des Modells (M) auszuwählen, wobei ein erstes Triplet (T1) die ersten drei Marker (m1, m2, m3) umfasst, ein zweites Triplet (T2) den ersten, dritten und vierten Marker (m1, m3, m4) umfasst, ein drittes Triplet (T3) den zweiten, dritten und vierten Marker (m2, m3, m4) umfasst und ein viertes Triplet den ersten, zweiten und vierten Marker (m1, m2, m4) umfasst,
- Triplet-Abgleichmittel (62), die konfiguriert sind, um zu prüfen, ob drei Punkte der geordneten Liste p(i) auf die drei Punkte des von den Triplet-Auswahlmitteln (61) ausgewählten Triplets treffen, und
- Ausrichtungsmittel (63), die konfiguriert sind, um die Ausrichtung von drei von den Triplet-Abgleichmitteln (62) gefundenen Punkten der geordneten Liste zu prüfen.

9. System (100) nach Anspruch 8, wobei die Triplet-Abgleichmittel (62) umfassen:

- Abstandsberechnungsmittel (64), die konfiguriert sind, um alle möglichen Abstände (d) zwischen zwei Punkten der geordneten Liste p(i) zu berechnen, und
- erste Komparationsmittel (65), die konfiguriert sind, um die von den Abstandsberechnungsmitteln (64) berechneten Abstände (d) mit bekannten Abständen (D12, D13, D14, D23, D24, D34) des gesuchten Referenztriplets (T1 oder T2 oder T3 oder T4) zu vergleichen und zu prüfen, ob diese Abstände innerhalb eines Unsicherheitsbereichs (Δd) gleich sind.

10. System (100) nach Anspruch 9, wobei die Ausrichtungsmittel (63) umfassen:

- Dreieckzeichnungsmittel (66), die konfiguriert sind, um ein Dreieck (E) aus den drei Punkten zu zeichnen, die von dem Triplet gefunden wurden, das von den Triplet-Abgleichmitteln (62) gefunden wurde,
- Höhenberechnungsmittel (67), die konfiguriert sind, um die Höhe (h) des von den Dreieckzeichnungsmitteln (66) gezeichneten Dreiecks (E) zu berechnen, und
- zweite Komparationsmittel (68), die konfiguriert sind, um die berechnete Höhe (h) mit einem Schwellenwert (Δh) zu vergleichen.

**11.** System (100) nach Anspruch 9, wobei die Ausrichtungsmittel (63) umfassen:

- Addiermittel (164), die konfiguriert sind, um zwei von den Abstandsberechnungsmitteln (64) berechneten Abstände ($d_{a,b}$ + $d_{b,c}$) zu addieren, und
- Komparatormittel (165), die konfiguriert sind, um die Summe der beiden von den Addiermitteln (164) berechneten Abstände ($d_{a,b}$ + $d_{b,c}$) mit dem anderen Abstand ($d_{a,c}$) der drei von den Triplet-Abgleichmitteln gefundenen Punkte, plus oder minus eines Schwellenwerts ($\Delta_l$), zu vergleichen, der die Messunsicherheit des Bewegungserfassungssystems und der Biegung der Langhantel berücksichtigt.

**12.** System (100) nach einem der vorstehenden Ansprüche, wobei der Zwei-Marker-Suchalgorithmus (7) umfasst:

- Paar-Abgleichmittel (70), die konfiguriert sind, um zu prüfen, ob zwei Punkte der geordneten Liste (i) auf ein Paar von Markern des Modells (M) treffen, und
- Paar-Auswahlmittel (71), die konfiguriert sind, um ein Paar von Punkten auszuwählen, die von den Paar-Abgleichmitteln (70) gefunden wurden und zwei Markern entsprechen;
wobei die Paar-Abgleichmittel (70) umfassen:

- erste Abstandsberechnungsmittel (71), die konfiguriert sind, um den Abstand (d) zwischen den zwei Punkten (Pa, Pb) der geordneten Liste p(i) zu berechnen,
- erste Komparationsmittel (73), die konfiguriert sind, um den Abstand (d), der zwischen zwei Punkten (Pa, Pb) der geordneten Liste berechnet wurde, mit vier bekannten Abständen ($D_A$, $D_B$, $D_C$, $D_D$) zu vergleichen, die basierend auf der Position der Marker (m1, m2, m3, m4) auf der Langhantel gemessen wurden;

der Zwei-Marker-Suchalgorithmus (7) umfasst:

- zweite Abstandsberechnungsmittel (74), die konfiguriert sind, um einen Abstand (d') zwischen der Position des ersten Markers (m1), der im vorangehenden Einzelbild gefunden wurde, und dem ersten Punkt (Pa) des Paares von Punkten zu berechnen, das die niedrigste x-Koordinate aufweist, und
- zweite Komparationsmittel (75), die konfiguriert sind, um den Abstand (d') mit einem Schwellenwert (Td) zu vergleichen, der die maximale Verschiebung von einem Punkt der Landhantel in einem Einzelbild berücksichtigt.

**Revendications**

**1.** Système (100) de reconnaissance et de suivi d'un haltère comprenant :

- un haltère (2) destiné à soutenir des poids (21) ;
- un premier repère (m1), un deuxième repère (m2), un troisième repère (m3) et un quatrième repère (m4) disposés dans l'haltère ; où le premier repère (m1) et le quatrième repère (m4) sont des repères latéraux disposés aux extrémités de l'haltère (2) et le deuxième repère (m2) et le troisième repère (m3) sont des repères centraux disposés dans une zone centrale de l'haltère, équidistants d'un centre (C2) de l'haltère ;
- un système de capture du mouvement (mocap) (1), de type optique, disposé devant l'haltère de façon à encadrer une zone de capture (V), où un utilisateur utilise l'haltère, et capturer des cadres constitués d'un ensemble (s(i)) de coordonnées de points dans l'espace par rapport à une référence cartésienne, parmi lesquelles il y a les positions des repères de l'haltère ;
- une CPU (5) reliée au susdit système (mocap) (1) pour recevoir et analyser ledit ensemble (s(i)) de coordonnées de points ;
- un écran (9) relié à ladite CPU (5) pour afficher des paramètres relatifs au mouvement du susdit haltère dans ladite zone de capture (V) ;
où ladite CPU (5) est configurée pour exécuter :

- un algorithme d'identification du repère (6) configuré pour identifier trois ou deux points de l'ensemble (s(i)) de points qui correspondent aux positions des repères respectifs, et
- un algorithme d'interpolation (8) configuré pour exécuter une interpolation des points repérés par ledit algorithme d'identification du repère (6) de manière à trouver la position du repère ou des repères manquants ;

**caractérisé en ce que**

ledit algorithme d'identification du repère (6) comprend des moyens d'ordre (51) qui ordonnent l'ensemble (s(i)) de coordonnées de points en ordre croissant des coordonnées x, de façon à obtenir une liste ordonnée (p(i)), et ledit algorithme d'identification du repère (6) comprend également :

- une procédure de recherche de trois repères (60) apte à trouver trois points de la liste ordonnée p(i) qui correspondent à trois repères ; et
- une procédure de recherche de deux repères (7) aptes à trouver deux points de la liste ordonnée p(i) qui correspondent à deux repères ; la procédure de recherche de deux repères (7) étant utilisée lorsque la procédure de recherche de trois repères (60) n'a pas trouvé les trois repères.

2. Système (100) selon la revendication 1, où le premier repère (m3) et le quatrième repère (m4) sont du type sphérique et comprennent une sphère (3) réalisée en matière rétroréfléchissante.

3. Système (100) selon la revendication 2, où ladite sphère (3) est soutenue par une tige (30) réalisée en plastique noir ayant une base discoïdale (31) qui est fixée à une extrémité (24) de l'haltère moyennant un ruban double face (32).

4. Système (100) selon l'une quelconque des revendications précédentes, où le deuxième repère (m2) et le troisième repère (m3) comprennent une bande (4) de ruban adhésif rétroréfléchissant enroulé en boucle autour de l'haltère (2).

5. Système (100) selon l'une quelconque des revendications précédentes, où le système mocap (1) comprend au moins deux caméras (10).

6. Système (100) selon la revendication 5, où le système mocap (1) comprend trois caméras (10) intégrées dans une barre (11) soutenue sur un chevalet (12).

7. Système (100) selon l'une quelconque des revendications précédentes, où le système mocap (1) est configuré de manière à acquérir des cadres avec une fréquence comprise entre 60 et 180 Hz.

8. Système (100) selon l'une quelconque des revendications précédentes, où ladite procédure de recherche de trois repères (60) comprend :

- des moyens de sélection de triplette (61) qui sélectionnent une triplette de référence parmi quatre possibles triplettes de référence (T1, T2, T3, T4) du modèle (M), où la première triplette (T1) comprend les trois premiers repères (m1, m2, m3), une deuxième triplette (T2) comprend le premier, le troisième et le quatrième repère (m1, m3, m4), une troisième triplette (T3) comprend le deuxième, le troisième et le quatrième repère (m2, m3, m4) et une quatrième triplette comprend le premier, le deuxième et le quatrième repère (m1, m2, m4),
- des moyens de correspondance de la triplette (62) configurés pour évaluer si trois points de la liste ordonnée p(i) rencontrent les trois points de la triplette sélectionnée par les moyens de sélection de la triplette (61), et
- des moyens d'évaluation de l'alignement (63) configurés pour évaluer l'alignement de trois points de la liste ordonnée trouvés par lesdits moyens de correspondance de la triplette (62).

9. Système (100) selon la revendication 8, où lesdits moyens de correspondance de la triplette (62) comprennent :

- des moyens de calcul de la distance (64) configurés pour calculer toutes les distances (d) possibles entre deux points de la liste ordonnée p(i), et
- des premiers moyens de comparaison (65) configurés pour comparer les distances (d) calculées par les moyens de calcul de la distance (64) avec des distances connues (D12, D13, D14, D23, D24, D34) de la triplette de référence (T1 ou T2 ou T3 ou T4) que l'on recherche et qui vérifient si ces distances sont égales entre elles dans une marge d'incertitude ($\Delta$d).

10. Système (100) selon la revendication 9, où lesdits moyens d'évaluation de l'alignement (63) comprennent :

- des moyens de construction de triangle (66) configurés pour construire un triangle (E) à l'aide des trois points trouvés par les moyens de correspondance de la triplette (62),
- des moyens de calcul de la hauteur (67) configurés pour calculer la hauteur (h) du triangle (E) construit par les moyens de construction de triangle (66), et
- des seconds moyens de correspondance (68) configurés pour comparer la hauteur (h) calculée avec une valeur

de seuil (∆h).

11. Système (100) selon la revendication 9, où lesdits moyens d'évaluation de l'alignement (63) comprennent :

- des dispositifs additionneurs (164) configurés pour faire la somme de deux distances entre elles ($d_{a,b}$ + $d_{b,c}$) calculée par les susdits moyens de calcul de la distance (64), et
- des moyens de correspondance (165) configurés pour comparer la somme des deux distances ($d_{a,b}$ + $d_{b,c}$) calculée par les susdits dispositifs additionneurs (164) avec l'autre distance ($d_{a,c}$) des trois points trouvés par les moyens de correspondance de triplette, plus ou moins une valeur de seuil ($∆_l$) qui prend en compte l'incertitude de mesure du système mocap et de la flexion de l'haltère.

12. Système (100) selon l'une quelconque des revendications précédentes, où l'algorithme de recherche de deux repères (7) comprend :

- des moyens de correspondance de paire (70) configurés pour évaluer si deux points de la liste ordonnée (i) p(i) rencontrent une paire de repères du modèle (M), et
- des moyens de sélection de paire (71) configurés pour sélectionner une paire de points trouvés par les moyens de correspondance de paire (70) qui correspondent à deux repères ;
lesdits moyens de correspondance de paire (70) comprennent :

- des premiers moyens de calcul de la distance (71) configurés pour calculer la distance (d) entre deux points (Pa, Pb) de la liste ordonnée p(i),
- des premiers moyens de correspondance (73) configurés pour comparer la distance (d) calculée entre deux points (Pa, Pb) de la liste ordonnée avec quatre distances connues ($D_A$, $D_B$, $D_C$, $D_D$) qui ont été mesurées sur la base du positionnement des repères (m1, m2, m3, m4) sur l'haltère ;

ledit algorithme de recherche de paire (7) comprend :

- des seconds moyens de calcul de la distance (74) configurés pour calculer une distance (d') entre la position du premier repère (m1) trouvé dans le cadre précédent et le premier point (Pa) de la paire de points qui a la coordonnée x inférieure, et
- des seconds moyens de correspondance (75) configurés pour comparer la distance (d') avec une valeur de seuil (Td) qui prend en compte le déplacement maximum qui peut être effectué à partir d'un repère de l'haltère dans l'intervalle d'un cadre.

FIG. 1

EP 4 053 796 B1

FIG. 2

FIG. 3

FIG. 4

FIG. 4A

FIG. 4B

FIG. 4C

EP 4 053 796 B1

FIG. 5

FIG. 6

FIG. 7

FIG. 8

FIG. 9

TRIPLET
MATCHING

63

dab, dbc, dac

61

dab+dbc

SUM

dac

164

COMPARISION

Dℓ

FIG. 10

T

165

P (i)

70

7

Distance

COUPLE
MATCHINE

1,3 or 2,4

71

MODEL

COUPLE
SELECT

1,2 or 3,4

M

1,4

2,3

FIG. 11

FIG. 12

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FLORES FRANCISCO J et al.** validity and reliability of a 3-axis accelerometer for measuring weightlifting movement. *INTERNAL JOURNAL OF SPORTS SCIENCE & COACHING: A MULTI-SCIENCE PUBLICATION*